# EUROPEAN PATENT SPECIFICATION

(11) **EP 2 940 762 B1**
(45) Date of publication and mention of the grant of the patent: **04.04.2018**
(21) Application number: 13867383.5
(22) Date of filing: 15.02.2013
(51) Int. Cl.: H01M 4/525, H01M 4/505, H01M 4/36, H01M 4/62, H01M 4/1391, H01M 4/04, H01M 10/052, H01M 4/58

(54) **ANODE ACTIVE MATERIAL COATED WITH MANGANESE POTASSIUM OXIDE FOR LITHIUM SECONDARY BATTERY AND METHOD FOR MANUFACTURING SAME**
MIT MANGANKALIUMOXID BESCHICHTETES, ANODENAKTIVES MATERIAL FÜR LITHIUMSEKUNDÄRBATTERIE UND VERFAHREN ZUR HERSTELLUNG DAVON
MATÉRIAU ACTIF D'ANODE REVÊTU D'OXYDE DE POTASSIUM-MANGANÈSE POUR BATTERIE RECHARGEABLE AU LITHIUM ET PROCÉDÉ POUR SA FABRICATION

(30) Priority: 27.12.2012 KR 20120154157
(43) Date of publication of application: 04.11.2015
(73) Proprietor: Korea Electronics Technology Institute, Gyeonggi-do 463-816 (KR)
(72) Inventor: CHO, Woo Suk, Seongnam-si Gyeonggi-do 463-400 (KR); SONG, Jun-Ho, Seongnam-si Gyeonggi-do 463-727 (KR); KIM, Jeom-Soo, Hwaseong-si Gyeonggi-do 445-984 (KR); YIM, Tae-Eun, Seoul 132-738 (KR); KIM, Young-Jun, Seongnam-si Gyeonggi-do 463-420 (KR); KIM, Sang-Min, Seoul 130-860 (KR); CHO, Hyunsang, Suwon-si Gyeonggi-do 442-082 (KR)
(74) Representative: Land, Addick Adrianus Gosling
(86) International application number: PCT/KR2013/001201
(87) International publication number: WO 2014/104466

(56) References cited:
- WO-A2-2008/091707
- KR-A- 20020 024 520
- KR-A- 20120 007 749
- KR-A- 20120 079 125
- US-A1- 2003 211 391
- US-A1- 2008 131 778
- US-A1- 2008 131 778
- US-A1- 2011 042 609
- US-A1- 2012 028 120
- S-B KIM ET AL: "Preparation and cycle performance at high temperature for Li[Ni0.5Co0.2Mn0.3]O2 coated with LiFePO4", JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 14, no. 6, 23 June 2009 (2009-06-23), pages 919-922, XP019783749, ISSN: 1433-0768

## Description

The present invention relates to a cathode active material for a lithium secondary battery. More specifically, the present invention relates to a cathode active material for a lithium secondary battery having improved battery characteristics and thermal stability because of manganese phosphate uniformly coated on the surface of the cathode active material, and a preparation method thereof.

Energy storage technologies have recently been drawing attention. As the application of energy storage technologies is widened into the fields of mobile phones, camcorders, laptop computers (notebook PCs), and even automobiles, the demand for high energy densification of a battery that is used as power source of for electronic devices is increasing. A lithium secondary battery is a battery that best satisfies the high energy demand of these technologies, and recently researches on this have been actively ongoing.

Since such lithium secondary battery has advantages of high energy density and long life span, it is used widely as power sources for portable electronic devices such as video cameras, laptop computers, and mobile phones, and recently, it has been applied to large batteries installed in hybrid electric vehicles (HEVs) or electric vehicles (EVs). A lithium secondary battery is a secondary battery having a structure in which lithium is eluted from the cathode as an ion and moves toward the negative electrode to be stored, and conversely, during charge, and the lithium ion returns from the negative electrode to the cathode during discharge, and it is known that the high energy density of the battery has its origin in the electrical potential of the cathode active material.

Meanwhile, a lithium-containing cobalt oxide (LiCoO₂) has been largely used as the cathode active material for a lithium secondary battery up until recently, and in addition, the use of lithium-containing manganese oxides such as LiMnO₂ having a layered crystal structure, LiMn₂O₄ having a spinel crystal structure, and the like, and a lithium-containing nickel oxide (LiNiO₂), or the like has been considered. Among the cathode active materials, LiCoO₂ is commonly used because it has excellent properties such as a cycle characteristic and so on and can be easily prepared, but disadvantageously, it has inferior stability and is weak in terms of price competitiveness due to a resource limitation of cobalt used as a raw material thereof. Therefore, the use of LiCoO₂ in large quantities as a power source in the sectors of electric vehicles or the like has a limitation.

Further, LiNiO₂ receives attention as a high capacity material because it is cheaper than cobalt oxide and 70 % or more of lithium can be reversibly charged and discharged, but it has a problem of inferior stability. Particularly, among the nickel-based lithium complex oxides, a Ni-rich composition in which the content of nickel is over 50 % may have a problem of deterioration in battery characteristics according to charge and discharge cycles. It is known that such deterioration is due to the elution of nickel from the cathode active material by the reaction of the cathode and the electrolyte solution, and particularly, it is known that it causes deterioration in the cycle life characteristics at a high temperature. Furthermore, deterioration in the thermal stability, particularly, the thermal stability at high temperature, of the cathode is pointed out as a serious problem because the structural stability and the chemical stability deteriorate in the Ni-rich composition.

Therefore, studies for resolving the deterioration in the battery characteristics caused by the side reaction due to the direct contact of the cathode active material and the electrolyte solution, and developing the cathode active material that is suitable to make the capacity high and that can resolve the problem of the stability at high temperature, are required for the Ni-rich cathode active materials.

S.-B. Kim et al., J. Solid State Electrochem (2010), vol. 14, no. 6, 23 June 2009, pages 919-922, discloses Li[Ni_{0.5}Co_{0.2}Mn_{0.3}]O₂ as a electrode material for a lithium secondary battery, wherein the electrode material is provided with a LiFePO₄ coating with improved cycle performance at high temperatures.

Patent document US 2012/0028120 A1 discloses a cathode composite electrode material including Li[Ni_{1/3}Co_{1/3}Mn_{1/3}]O₂ or LiNi_{0.8}Co_{0.15}Al_{0.05}O₂ coated with AlPO₄, having improved cycle performance at high temperatures.

Patent document US 2011/0042609 A1 discloses electrodes comprising Li[Li_{0-0.33}Ni_{0-0.2}Mn_{0-0.6}]O₂ coated with M"(PO₄)_{q} wherein M is one of Al, Fe, Ni, Mn, Co, and Li.

Patent document US 2008/0131778 A1 discloses electrodes comprising oxides such as LiCoO₂ having a coating layer of a hydroxide containing Ni and/or Mn.

Patent document US 2003/0211391 A1 discloses Li_{1.03}Ni_{0.8}Co_{0.1}Mn_{0.1}O₂ as an electrode material, which is coated with AlPO₄.

It is an aspect of the present invention to provide a cathode active material for a lithium secondary battery having improved battery characteristics and thermal stability by uniformly coating manganese phosphate on the surface of a Ni-rich cathode active material.
It is another aspect of the present invention to provide a preparation method of the cathode active material for a lithium secondary battery.

The present invention provides a cathode active material for a lithium secondary battery, including a coating layer including manganese phosphate formed on the surface of a nickel-based lithium transition metal oxide, wherein the nickel-based lithium transition metal oxide includes nickel (Ni), manganese (Mn), and cobalt (Co) as the transition metal, and the content of nickel is 50 % or more based on the total of the transition metals.

The present invention also provides a preparation method of the cathode active material for a lithium secondary battery, including the steps of: forming a coating layer by adding a nickel- based lithium transition metal oxide to a coating solution including a manganese salt and a phosphate; and heat-treating the nickel-based lithium transition metal oxide on which the coating layer is formed, wherein the nickel-based lithium transition metal oxide includes nickel (Ni), manganese (Mn), and cobalt (Co) as the transition metal, and the content of nickel is 50,% or more based on the total of the transition metals.

Hereinafter, the cathode active material for a lithium secondary battery, the preparation method thereof, and the lithium secondary battery including the same according to the specific embodiments of the invention are explained in more detail. However, the following is only for the understanding of the present invention and the scope of the present invention is not limited to or by them, and it is obvious to a person skilled in the related art that the embodiments can be variously modified within the scope of the present claims. In addition, "include" or "comprise" means to include any components (or ingredients) without particular limitation unless there is a particular mention about them in this description, and it cannot be interpreted as excluding the addition of other components (or ingredients).

The present invention prepares the cathode active material by coating manganese phosphate on the surface of a Ni-rich layered cathode material including a ternary system in which the content of nickel is 50 % or more of the total of the transition metals in a uniformly dispersed form, and thus can innovatively reduce the deterioration in battery characteristics according to charge/discharge cycles, markedly increase cycle life characteristics at room temperature and high temperature, and secure excellent power characteristics thereof. Furthermore, the present invention can effectively improve the thermal stability of the cathode that is directly connected with the stability of batteries.

Therefore, the present invention can provide a Ni-rich cathode material having the improved thermal stability while enhancing the electrochemical battery characteristics thereof.

According to one embodiment of the invention, a cathode active material for a lithium secondary battery coated with manganese phosphate is provided. The cathode active material for a lithium secondary battery may include a coating layer including manganese phosphate formed on the surface of the nickel-based lithium transition metal oxide. Here, the nickel-based lithium transition metal oxide includes nickel (Ni), manganese (Mn)s and cobalt (Co) as the transition metals, and the content of Ni is 50 % or more based on the total of the transition metals. The present invention can provide a cathode active material for a lithium secondary battery having excellent thermal stability and battery characteristics due to the manganese phosphate coating layer

The nickel-based lithium transition metal oxide in the present invention can exhibit high capacity because it includes an excess of Ni, at 50 % or more based on the total of the transition metals (based on moles thereof). The content of nickel in the nickel-based lithium transition metal oxide may be 50 % or more or 50 % to 90 %, preferably 55 % or more, and more preferably 60 % or more, based on the total of the transition metals. When the content of Ni is below 50 %, it is hard to expect high capacity. On the contrary, when the content is over 90 %, the structural stability and the chemical stability undesirably decrease and the stability at a high temperature thereof may largely decrease due to high reactivity with an electrolyte solution.

The nickel-based lithium transition metal oxide includes manganese (Mn) and cobalt (Co) in addition to nickel (Ni), as the transition metals. Here, the content of Mn may be 10 % to 30 %, preferably 15 % to 20 %, and the content of Co may be 10 % to 30 %, preferably 15 % to 20 %, based on the total of the transition metals (based on moles thereof).

In addition, parts of the transition metal components in the nickel-based lithium transition metal oxide may be substituted by one or more metal elements (M) selected from the group consisting of Al, Mg, Fe, Cu, Zn, Cr, Ag, Ca, Na, K, In, Ga, Ge, V, Mo, Nb, Si, Ti, and Zr. In the aspect of structural stability, it is preferable that the metal element (M) substituent is Ti, Zr, or Al. At this time, the content of the metal element (M) substituents may be 0.01 % to 10 %, preferably 0.05 % to 5 %, and more preferably 0.1 % to 2 %, based on the total of the transition metals (based on moles thereof). When the content of the substituents is below 0.1 %, the effect of the substitution is relatively low. On the contrary, when the content of the substituents is over 5 %, the amount of the transition metals such as Ni and so on undesirably decreases relatively and thus the capacity of the battery may decrease.

The total content of the transition metals in the nickel-based lithium transition metal oxide of the present invention means the sum of the content of the transition metals, nickel (Ni), manganese (Mn), and cobalt (Co), except lithium (Li), and the content of the metal elements (M) substituting for the transition metals. Here, the ratio of the content of lithium to the total content of the transition metals such as nickel (Ni), manganese (Mn), and cobalt (Co) and the metal elements (M) substituting for the transition metals may be preferably 1.005 to 1.30, and more preferably 1.01 to 1.20, based on moles thereof.

The nickel-based lithium transition metal oxide in the cathode active material of the present invention may be represented by the following Chemical Formula 1.

[Chemical Formula 1] LiNiₐCo_{b}Mn_{c}M_{d}O₂

In Chemical Formula 1, a is 0.5 or more or 0.5 or 0.9, preferably 0.55 or more, and more preferably 0.6 or more; b is 0.1 to 0.3, preferably 0.15 to 0.2; c is 0.1 to 0.3, preferably 0.15 to 0.2; and d is 0 to 0.1, and the sum of a, b, c, and d, namely a+b+c+d, may be 1. Furthermore, in Chemical Formula 1, M is one or more metal elements selected from the group consisting of Al, Mg, Fe, Cu, Zn, Cr, Ag, Ca, Na, K, In, Ga, Ge, V, Mo, Nb, Si, Ti, and Zr, and Ti, Zr, or Al is preferable among them in the aspect of the structural stability.

The nickel-based lithium transition metal oxide may be LiNi_{0.5}Co_{0.2}Mn_{0.3}O₂, LiNi_{0.6}Co_{0.2}Mn_{0.2}O₂, LiNi_{0.7}Co_{0.15}Mn_{0.15}O₂, and so on. Among them, LiNi_{0.6}Co_{0.2}Mn_{0.2}O₂ is preferable in the aspect of battery characteristics.

As disclosed above, the present invention is characterized in that the lithium metal complex oxide in which nickel occupies 50 % or more of the octahedral site occupied by the transition metals is used as the cathode material, the basic material for coating. The lithium metal complex oxide may have a layered structure (space group R-3m) or a spinel structure (space group Fd-3m).

Meanwhile, the nickel-based lithium transition metal oxide may have a highly crystalline structure and the average particle diameter thereof may be 3 µm or more or 3 to 15 µm, preferably 5 µm or more, and more preferably 8 µm or more. The electrode active material including the nickel-based lithium transition metal oxide may have the structure of single particles of which the average particle diameter is 3 µm or more (primary particle structure), or the agglomerated structure of the single particles, namely, the structure in which the single particles are agglomerated and internal voids are formed (secondary particle structure). The agglomerated particle structure can maximize the surface area for reacting with the electrolyte solution, and can exhibit high rate characteristics and extend the reversible capacity of the cathode at the same time.

The cathode active material for a lithium secondary battery of the present invention is characterized in that manganese phosphate is coated on the surface of the lithium complex oxide core as disclosed above. Particularly, manganese phosphate may be a compound of which the metallic valence of manganese is 2, and may preferably be Mn₃(PO₄)₂ and so on.

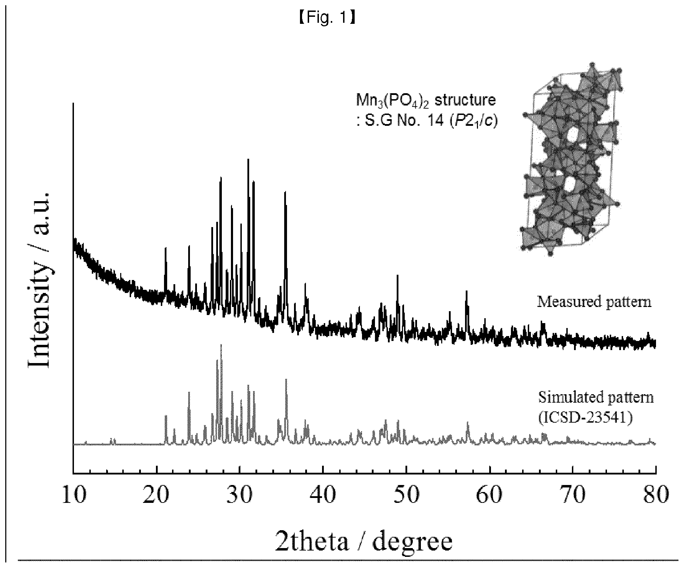

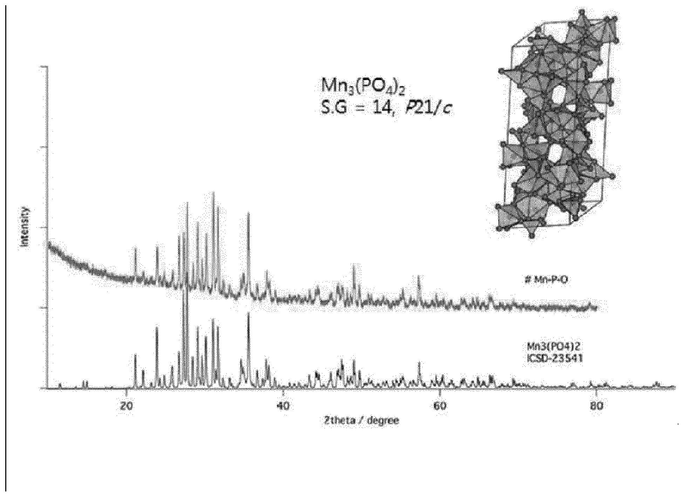

Manganese phosphate may have the crystal structure of monoclinic Bravais lattice and space group 14, *P*₂₁/*c*, as illustrated in Fig. 1. Particularly, the crystal structure of manganese phosphate is monoclinic, and Mn may be placed in the octahedral site, while P may be placed in the tetrahedral site. Furthermore, manganese phosphate may have the crystal structure belonging to space group No. 14, *P*₂₁/*c* (#14). Here, the space group of the crystal is what describes symmetry of the crystal structure mathematically, it is composed of the combination of 14 Bravais lattices and 32 crystallographic point groups, and refers to 230 space groups that crystals can have by the combination of the symmetry operation. Meanwhile, the lattice constants of the crystal structure may be a = 8.94 Å, b = 10.04 Å, and c = 24.14 Å (angstrom), and at this time, it is possible that α =γ = 90° and β = 120°.

Manganese phosphate composing the coating layer of the cathode active material according to the present invention is a polyanionic material having the crystal structure disclosed above, and since it has tunnels (channels) through which alkali ions including lithium can pass, lithium ions can diffuse effectively through this. Accordingly, it has an advantageous effect on the improvement of electrochemical characteristics because it has the structure of which the direct contact of the cathode active material and the electrolyte solution is restrained by the manganese phosphate coating layer such as Mn₃(PO₄)₂ and the side reaction of electrolyte is inhibited, but lithium ions can diffuse through the coating layer.

The average particle diameter of manganese phosphate may be 100 nm or less or 2 nm to 100 nm, preferably 50 nm or less, and more preferably 30 nm or less or 5 nm to 30 nm. The average particle diameter of manganese phosphate may be 100 nm or less in the aspect of the coating uniformity. The average particle diameter of manganese phosphate can be measured by using a scanning electron microscope (SEM), a transmission electron microscope (TEM), and so on. The coating layer of manganese phosphate in the cathode active material for a lithium secondary battery of the present invention is composed of particles, and the thickness of the coating layer may be similar to the particle size of manganese phosphate.

The content of manganese phosphate may be 0.1 wt% to 5.0 wt%, preferably 0.2 to 3.0 wt%, and more preferably 0.5 to 1.0 wt%, of the total weight of the cathode active material. The content of manganese phosphate may be 0.1 wt% or more in the aspect of thermal stability, and 5.0 wt% or less in the aspect of power characteristics and cycle life characteristics.

The cathode active material for a lithium secondary battery of the present invention is characterized in that manganese phosphate is coated on the surface of the lithium complex oxide core disclosed above, and makes it possible to exhibit excellent battery performance in cycle life characteristics at room temperature and high temperature and power characteristics. Furthermore, there is an excellent effect of innovatively improving the exothermal temperature at which thermal degradation occurs and the caloric value, in the result of thermal stability evaluation by a differential scanning calorimetry (DSC) analysis. Accordingly, the thermal stability of the cathode material is innovatively improved and the stability of the battery can be secured.

Particularly, in the evaluation on the thermal stability of the cathode active material for a lithium secondary battery of the present invention by the DSC, the maximum exothermal peak temperature (T_{coat}) measured of the cathode active material including the coating layer including manganese phosphate formed on the surface of the nickel-based lithium transition metal oxide is 10 °C or more or 10 °C to 35 °C, preferably 12 °C or more, more preferably 15 °C or more, and still more preferably 20 °C or more, higher than the maximum exothermal peak temperature (T_{noncoat}) measured of the cathode active material not including the coating layer including manganese phosphate on the surface of the nickel-based lithium transition metal oxide, and thus the cathode active material of the present invention can show excellent thermal stability at a high temperature.

With regard to the thermal stability improved in this way, in the thermal stability evaluation by the DSC, the caloric value (H_{coat}) measured of the cathode active material including the coating layer including manganese phosphate formed on the surface of the nickel-based lithium transition metal oxide may be 80 % or less or 40 % to 80 %, preferably 77 % or less, more preferably 75 % or less, and still more preferably 65 % or less of the caloric value (H_{noncoat}) measured of the cathode active material not including the coating layer including manganese phosphate on the surface of the nickel-based lithium transition metal oxide.

Meanwhile, according to another embodiment of the invention, the preparation method of the cathode active material for a lithium secondary battery disclosed above is provided. The method of preparing the cathode active material for a lithium secondary battery may include the steps of forming a coating layer by adding a nickel-based lithium transition metal oxide to a coating solution including a manganese salt and a phosphate, and heat-treating the nickel-based lithium transition metal oxide on which the coating layer is formed. Here, the nickel-based lithium transition metal oxide includes nickel (Ni), manganese (Mn), and cobalt (Co) as the transition metal, and the content of nickel may be 50 % or more based on the total of the transition metals.

The preparation method of the cathode active material for a lithium secondary battery according to the present invention makes it possible to disperse manganese phosphate evenly on the surface of the cathode active material core in the form of nanoparticles so as to form a uniform coating layer, by using a wet coating process rather than a traditional dry coating process.

Manganese phosphate composing the coating layer in the cathode active material for a lithium secondary battery of the present invention may be formed by reacting various manganese salts and phosphates in a solution phase. Preferably, the manganese salt may be one or more selected from the group consisting of manganese oxide, manganese oxalate, manganese acetate, manganese nitrate, and derivatives thereof. Further, the phosphate may be one or more selected from the group consisting of ammonium phosphate, sodium phosphate, potassium phosphate, and derivatives thereof.

The manganese salt and the phosphate may be used in an amount of a stoichiometric range optimizing the molar ratio of manganese (Mn) of the manganese salt and phosphorus (P) of the phosphate to the manganese phosphate of the coating layer finally formed. For example, the manganese salt and the phosphate may be used respectively so that the molar ratio of manganese (Mn) from the manganese salt and phosphorus (P) from the phosphate is 3:2 in the manganese phosphate, Mn₃(PO₄)₂, of the final coating layer.

The manganese salt and the phosphate may be coated on the surface of the lithium metal complex oxide core by a wet process using a solution or a dispersion of one or more solvents such as distilled water, isopropanol (IPA), ethanol, and the like, and the wet process has an advantage in that the salts can be evenly coated in the form of nanoparticles, in comparison to a traditional dry process.

The preparation method of the cathode active material for a lithium secondary battery according to the present invention is characterized in that the coating step is carried out according to a wet process of adding the nickel-based lithium transition metal oxide to the solution including the manganese salt and the phosphate. Here, the content of nickel in the nickel-based lithium transition metal oxide may be 50 % or more based on the total of the transition metals (based on moles thereof) as disclosed above, with regard to the cathode active material for a lithium secondary battery.

Particularly, the preparation method of the cathode active material for a lithium secondary battery may include the step of forming a coating layer on the surface of the nickel-based lithium transition metal oxide represented by the following Chemical Formula 1 by using a manganese salt and a phosphate.

[Chemical Formula 1] LiNiₐCO_{b}Mn_{c}M_{d}O₂

In Chemical Formula 1, a is 0.5 or more or 0.5 or 0.9, preferably 0.55 or more, more preferably 0.6 or more; b is from 0.1 to 0.3, preferably 0.15 to 0.2; c is 0.1 to 0.3, preferably 0.15 to 0.2; and d is 0 to 0.1, and a+b+c+d may be 1. Furthermore, in Chemical Formula 1, M is one or more metal elements selected from the group consisting of Al, Mg, Fe, Cu, Zn, Cr, Ag, Ca, Na, K, In, Ga, Ge, V, Mo, Nb, Si, Ti, and Zr.

The nickel-based lithium transition metal oxide may be LiNi_{0.5}Co_{0.2}Mn_{0.3}O₂, LiNi_{0.6}Co_{0.2}Mn_{0.2}O₂, LiNi_{0.7}Co_{0.15}Mn_{0.15}O₂, and so on. Among them, LiNi_{0.6}Co_{0.2}Mn_{0.2}O₂ is preferable in the aspect of battery characteristics.

The preparation method of the cathode active material for a lithium secondary battery according to the present invention may form a coating layer of manganese phosphate precursor compounds on the surface of the nickel-based lithium transition metal oxide by putting the nickel-based lithium transition metal oxide in the solution including the manganese salt and the phosphate and stirring the same. Here, the manganese phosphate precursor compounds may include manganese (Mn) and phosphate (PO₄) in the stoichiometric composition range in which the manganese phosphate of the final coating layer can be formed. For example, the molar ratio of manganese (Mn) and phosphate (PO₄) in the manganese phosphate precursor compounds may be 3:2 so that Mn₃(PO₄)₂ is formed in the final coating layer as the manganese phosphate.

The present invention may further include the step of filtering and drying the nickel-based lithium transition metal oxide on which the coating layer of the manganese phosphate precursor compounds is formed for eliminating the solvent. The drying process may be carried out in a temperature range of 80 °C to 150 °C, preferably 100 °C to 140 °C, and more preferably 110 °C to 130 °C. Furthermore, the drying process may be carried out for 6 to 16 hr, preferably 7 to 15 hr, and more preferably 8 to 14 hr.

In the preparation method of the cathode active material for a lithium secondary battery according to the present invention, the step of heat-treating the nickel-based lithium transition metal oxide on which the coating layer is formed may be carried out in a temperature range of 200 °C to 700 °C, preferably 300 °C to 650 °C, and more preferably 400 °C to 600 °C. When the temperature of the heat-treating process is below 200 °C, an amorphous manganese phosphate may be formed on the surface of the active material core during the heat-treating process, and the binding strength of the coating may markedly decrease because the interface bond of the active material core and the coated material decreases. On the contrary, when the temperature of the heat-treating process is over 700 °C, the nickel-based lithium transition metal oxide, the active material core, may deteriorate by the high temperature heat-treating.

Furthermore, such heat-treating process may be carried out for 1 to 12 hr, preferably 2 to 11 hr, and more preferably 3 to 10 hr. When the heat-treating time is below 1 hr, the manganese phosphate coating layer may not be properly formed on the surface of the nickel-based lithium transition metal oxide. On the contrary, when the heat-treating time is over 12 hr, it may cause the deterioration of the nickel-based lithium transition metal oxide, the active material core.

The preparation method of the cathode active material for a lithium secondary battery according to the present invention applies a wet process to the coating of manganese phosphate, and may include the steps of: a) preparing the solution including the manganese salt and the phosphate disclosed above; b) adding the Ni-rich lithium metal complex oxide of which the content of Ni is 50 % or more as disclosed above to the solution of step a) and stirring the same at room temperature (25 °C) for forming the coating layer of the manganese phosphate precursor on the surface of the complex oxide; c) filtering and drying the same at 80 to 150 °C for eliminating the solvent; and d) heat-treating the powder collected after the drying step at 200 to 700 °C.

Meanwhile, in another embodiment of the preparation method of the cathode active material for a lithium secondary battery according to the present invention, the cathode active material coated with Mn₃(PO₄)₂, the final manganese phosphate, may be prepared by carrying out the steps of: preparing a solution by dissolving a manganese salt in distilled water; adding the active material core powder composed of the Ni-rich lithium metal complex oxide of which the content of Ni is 50 % or more as disclosed above to the distilled water solution in which the manganese salt is dissolved and stirring the same at room temperature at 360 rpm for 1 hr; adding a phosphate to the solution in which the active material core is mixed and stirring the same at room temperature at 360 rpm for 2 hr; filtering the reacted solution for eliminating the distilled water and drying the same at 120 °C for 12 hr for completely eliminating the residual moisture; and heat-treating the same at 550 °C for 10 hr under an argon atmosphere by using an electric furnace.

Meanwhile, according to still another embodiment of the present invention, a lithium secondary battery including the cathode active material on which manganese phosphate is coated as disclosed above is provided. The lithium secondary battery may include: a cathode including the cathode active material; an anode including an anode active material which is capable of intercalation or deintercalation of lithium ions; a separator between the cathode and the anode; and a nonaqueous electrolyte.

According to the present invention, since the surface of the lithium metal complex oxide is evenly coated with manganese phosphate, the cathode active material coated with manganese phosphate can inhibit the side reaction between the lithium metal complex oxide and the electrolyte and can suppress the elution of the metal elements from the cathode and the deterioration phenomenon when it is applied to the cathode of the lithium secondary battery.

Meanwhile, the lithium secondary battery of the present invention is characterized in that it includes the cathode active material coated with manganese phosphate as the cathode material, and various cathodes, anodes, separators, electrolytes, conducting materials, binders, and so on known to be usable in the lithium secondary battery may be optimally applied to the present invention.

The lithium secondary battery including the cathode active material according to the present invention shows a main exothermal peak, namely, a maximum exothermal peak, of which the temperature position is moved 10 °C or more or 10 °C to 35 °C, preferably 12 °C or more, more preferably 15 °C or more, and still more preferably 20 °C or more to an upper position, compared to before it is coated, in the thermal stability evaluation in 4.3 V charge state by a DSC (differential scanning calorimetry) measurement. Furthermore, the caloric value of the same is decreased by 20 % or more or 25 % or 60 %, preferably 23 % or more, more preferably 25 % or more, and still more preferably 35 % or more, compared to before it is coated.

Particularly, the lithium secondary battery of the present invention can show excellent thermal stability at a high temperature in the thermal stability evaluation by the DSC, and the maximum exothermal peak temperature (T_{coat}) measured of the cathode active material including the coating layer including manganese phosphate formed on the surface of the nickel-based lithium transition metal oxide, the active material core, is 10 °C or more or 10 °C to 35 °C, preferably 12 °C or more, more preferably 15 °C or more, and still more preferably 20 °C or more, higher than the maximum exothermal peak temperature (T_{noncoat}) measured of the cathode active material not including the coating layer including manganese phosphate on the surface of the nickel-based lithium transition metal oxide.

With regard to the thermal stability improved in this way, in the thermal stability evaluation by the DSC, the caloric value (H_{coat}) measured to the cathode active material including the coating layer including manganese phosphate formed on the surface of the nickel-based lithium transition metal oxide may be 80 % or less or 40 % to 80 %, preferably 77 % or less, more preferably 75 % or less, and still more preferably 65 % or less of the caloric value (H_{noncoat}) measured of the cathode active material not including the coating layer including manganese phosphate on the surface of the nickel-based lithium transition metal oxide.

In this way, the lithium secondary battery using the cathode active material of the present invention can secure superior thermal stability for the lithium secondary battery using the cathode active material not coated with manganese phosphate Mn₃(PO₄)₂.

The lithium secondary battery has improved rate characteristics and cycle life characteristics compared to before manganese phosphate is coated. Particularly, a 5 C discharge capacity of the rate characteristics of the lithium secondary battery measured by a constant-current charge/discharge method may be 60 mAh/g or more or 60 to 180 mAh/g, preferably 88 mAh/g or more, and more preferably 100 mAh/g or more. With this, the capacity retention rate after the 50th charge/discharge of the lithium secondary battery may be 85 % or more, preferably 95 % or more, compared to the initial capacity, in a room temperature cycle test carried out with a 0.5 C condition at 25 °C. Further, the capacity retention rate after the 50th charge/discharge of the lithium secondary battery may be 85 % or more, preferably 95 % or more, compared to the initial capacity, in the high temperature cycle test carried out with the 0.5 C condition at 60 °C. At this time, the capacity may be 150 mAh/g or more, and preferably 160 mAh/g or more.

Furthermore, the present invention can show the effect of decreasing the caloric value of the cathode of a 4.3 V charge state to 300 J/g or less or 50 to 300 J/g, preferably 280 J/g or less, and more preferably 250 J/g or less, because of the manganese phosphate coating layer of the cathode active material of the present invention

In the present invention, items besides the above disclosure can be added or subtracted as necessary and the present invention does not particularly limit them.

The present invention can effectively prepare a lithium secondary battery having improved battery characteristics by uniformly coating manganese phosphate on the surface of a Ni-rich cathode active material.

When the cathode active material of the present invention is applied to a lithium secondary battery, the thermal stability can be markedly improved, and particularly, high temperature characteristics are improved, and cycle characteristics and power characteristics can be enhanced because the side reaction of the electrolyte is inhibited. Particularly, the cathode active material according to the present invention increases the temperature of the main exothermal peak and decreases the caloric value in the DSC evaluation, and thus it shows markedly improved thermal stability.

### BRIEF DESCRIPTION OF THE DRAWINGS

Fig. 1 shows the crystal structure and the XRD pattern (intensity, 2 theta/degree) of a Mn₃(PO₄)₂ coating material prepared according to Example 1 of the present invention.
Fig. 2 shows the scheme of the surface coating method of Mn₃(PO₄)₂ nanoparticles according to Example 1 of the present invention.

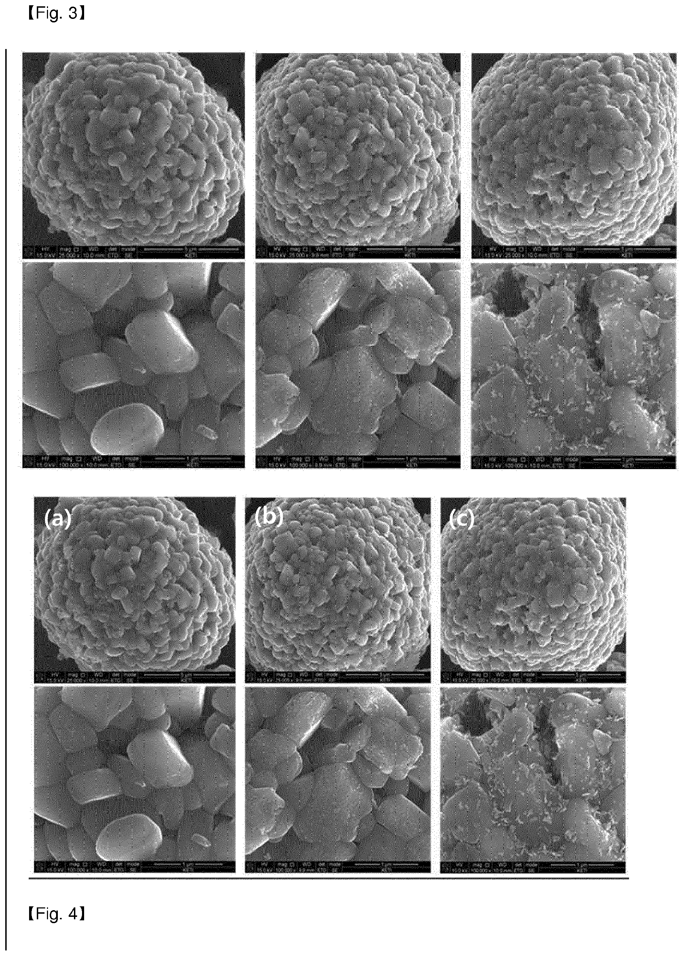

Fig. 3 shows the SEM images of NCM622 coated with Mn₃(PO₄)₂ according to Comparative Example 1 and Examples 1 and 3 of the present invention [a) 0 wt%, b) 0.5 wt%, and c) 1.0 wt%].

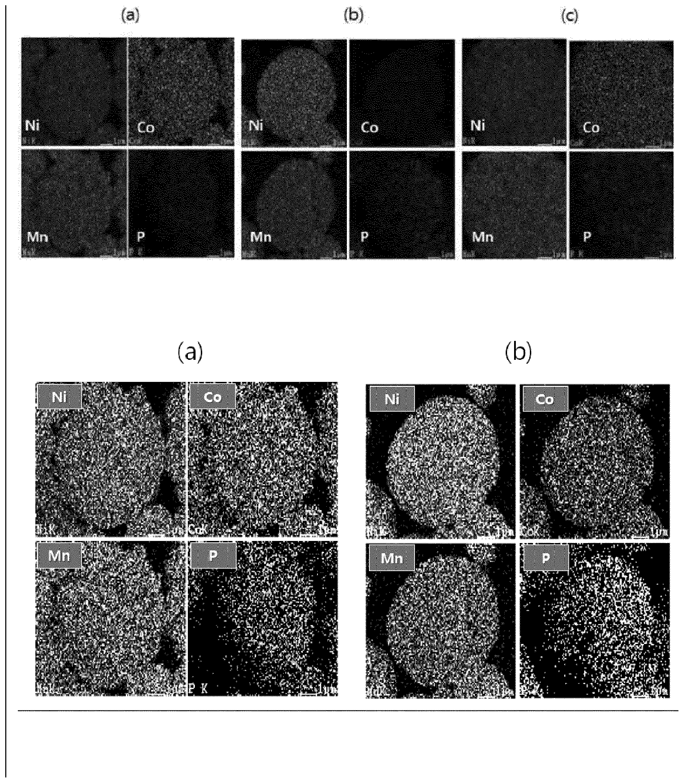

Fig. 4 shows the EDS mapping results of NCM622 coated with Mn₃(PO₄)₂ according to Examples 1 and 3 of the present invention [a) 0.5 wt%, b) 1.0 wt%] .
Fig. 5 is a graph showing the power characteristics of NCM622 coated with Mn₃(PO₄)₂ according to Comparative Examples 1 to 4 and Examples 1 and 3 of the present invention.
Fig. 6 is a graph showing the room temperature (25 °C) cycle life characteristics of NCM622 coated with Mn₃(PO₄)₂ according to Comparative Examples 1 to 4 and Examples 1 and 3 of the present invention.
Fig. 7 is a graph showing the high temperature (60 °C) cycle life characteristics of NCM622 coated with Mn₃(PO₄)₂ according to Comparative Examples 1 to 4 and Examples 1 and 3 of the present invention.
Fig. 8 is a DSC curve graph of the electrodes of NCM622 coated with Mn₃(PO₄)₂ according to Comparative Example 1 and Examples 1 and 3 of the present invention (4.3 V full charge state).

### DETAILED DESCRIPTION OF THE EMBODIMENT

Hereinafter, preferable examples and comparative examples are presented for understanding the present invention. However, the following examples are only for illustrating the present invention and the present invention is not limited to or by them.

### Example 1

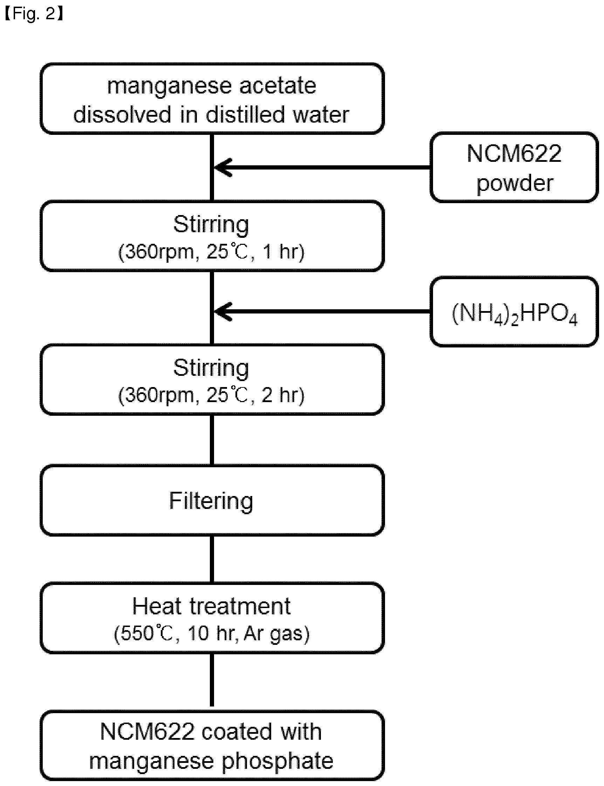

As illustrated in Fig. 2, the cathode active material for a lithium secondary battery including manganese phosphate coated on the surface of the nickel-based lithium transition metal oxide was prepared by using a solution including a manganese salt and a phosphate.

After dissolving 0.1036 g of Mn(CH₃COO)₂, the manganese salt, in 20 mL of a distilled water, 10 g of LiNi_{0.6}Co_{0.2}Mn_{0.2}O₂, the nickel-based lithium transition metal oxide (NCM622 powder) having an average particle diameter of 11 µm was added thereto and the mixture was stirred at 360 rpm at 25 °C for 1 hr. Subsequently, 0.0372 g of (NH₄)₂HPO₄, the phosphate, was added thereto and the mixture was stirred at 360 rpm at 25 °C for 2 hr again. After stirring the same in this way, the final reaction product was filtered for eliminating the solvent, and the filtered solid was dried at 120 °C for 12 hr. The powder collected in this way was heat-treated at 550 °C for 10 hr under an inert Ar gas atmosphere.

After the heat-treating process was finished, the cathode active material for a lithium secondary battery composed of the nickel-based lithium transition metal oxide coated with manganese phosphate Mn₃(PO₄)₂ having an average particle diameter of 100 nm or less was prepared. At this time, the amount of the coated manganese phosphate was 0.5 wt% of the total weight of the cathode active material.

### Examples 2 and 3

The cathode active material for a lithium secondary battery composed of the nickel-based lithium transition metal oxide, LiNi_{0.6}Co_{0.2}Mn_{0.2}O₂, coated with manganese phosphate having the average particle diameter of 100 nm or less was prepared according to the same method as in Example 1, except that the amount of the manganese salt, Mn(CH₃COO)₂, and the phosphate, (NH₄)₂HPO₄, was changed into 0.1554 g and 0.2073 g or 0.0558 g and 0.0745 g respectively so that the content of manganese phosphate, Mn₃(PO₄)₂, was 0.75 wt% or 1.0 wt% respectively in the coating layer finally formed. At this time, the amount of the coated manganese phosphate was 0.75 wt% or 1.0 wt% of the total weight of the cathode active material, respectively.

### Comparative Example 1

The cathode active material for a lithium secondary battery composed of the nickel-based lithium transition metal oxide, LiNi_{0.6}Co_{0.2}Mn_{0.2}O₂, used in Example 1 was prepared, except that the coating layer was not formed thereon.

### Comparative Example 2

The cathode active material for a lithium secondary battery including an Al₂O₃ coating layer, instead of the manganese phosphate coating layer formed from the manganese salt and the phosphate, was prepared.

After dispersing 0.5 wt% of Al₂O₃ powder having an average particle diameter of 50 nm in IPA (isopropanol) with respect to the weight of the cathode active material, the nickel-based lithium transition metal oxide (NCM622 powder), LiNi_{0.6}Co_{0.2}Mn_{0.2}O₂, having the average particle diameter of 11 µm was added thereto and the mixture was sonicated for 1 min for uniform dispersion. Subsequently, all of the solvent, IPA, was eliminated while stirring the mixture at 360 rpm at 60 °C for 1 hr for coating Al₂O₃ on the surface of LiNi_{0.6}Co_{0.2}Mn_{0.2}O₂. The powder coated with the alumina compound obtained by evaporating the solvent was heat-treated at 500 °C for 5 hr under an air atmosphere.

After the heat-treating process was finished, the cathode active material for a lithium secondary battery composed of the nickel-based lithium transition metal oxide coated with Al₂O₃ having an average particle diameter of 50 nm was prepared. At this time, the amount of the coated Al₂O₃ was 0.5 wt% with respect to the total weight of the cathode active material.

### Comparative Examples 3 and 4

The cathode active material for a lithium secondary battery composed of the nickel-based lithium transition metal oxide, LiNi_{0.6}Co_{0.2}Mn_{0.2}O₂, coated with Al₂O₃ having the average particle diameter of 50 nm was prepared according to the same method as in Comparative Example 2, except that the content of Al₂O₃ was changed to 1.0 wt% or 3.0 wt% respectively.

### Experiment Examples

After preparing the lithium secondary batteries for testing the electrochemical performance of the cathode active material by using the cathode active materials of Examples 1 to 3 and Comparative Examples 1 to 4 according to the following method, the battery performances thereof were tested.

### a) Preparation of lithium secondary battery

Slurries were prepared by using 95 wt% of the cathode active material powders of Examples 1 to 3 and Comparative Examples 1 to 4 as the active material, 3 wt% of Super-P as the conductive material, polyvinylidene fluoride as the binder, and N-methyl pyrrolidone (NMP) as the solvent.

After coating and drying each slurry on 20 µm thick Al foil, the coated foils were consolidated with a press and dried at 120 °C for 16 hr in a vacuum condition so as to prepare circular disc electrodes with a 16 mm diameter.

Punched lithium foils with a 16 mm diameter were used as the counter electrode, polypropylene films were used as the separator, and 1 M LiPF₆ ethylene carbonate/dimethoxyethane (EC/DME) 1:1 v/v mixture solutions were used as the electrolyte. Subsequently, 2032 coin cells, the batteries for evaluating the electrochemical properties, were prepared by impregnating the electrolyte in the separator and inserting the separator between the working electrode and the counter electrode.

### b) Evaluation on battery performance

The evaluation of charge/discharge properties of the batteries was carried out by using a constant-current method, and the charge/discharge voltage range was 3.0 V to 4.3 V. The initial capacity was measured with the current density of 0.1 C, and the power characteristic was measured with 0.1 C, 0.2 C, 0.5 C, 1 C, 2 C, and 5 C rates. The room temperature cycle life characteristic was measured with a 0.5 C rate at 25 °C. The high temperature cycle life characteristic was measured with a 0.5 C rate at 60 °C.

The results of the evaluation of battery performance of the lithium secondary batteries prepared by using the cathode active material according to Examples 1 to 3 and Comparative Examples 1 to 4 are listed in the following Table 1.

**[Table 1]**

| | Components of cathode active material | | | Initial discharge capacity (mAh/g) | Room temp. cycle life (mAh/g) | High temp. cycle life* (mAh/g) |
|---|---|---|---|---|---|---|
| | Core | Coating layer | Amount of coating layer (wt%) | | | |
| Example 1 | LiNi_{0.6}Co_{0.2}Mn_{0.2}O₂ | Mn₃(PO₄)₂ | 0.5 | 171.9 | 149.2 | 160.4 |
| Example 2 | LiNi_{0.6}Co_{0.2}Mn_{0.2}O₂ | Mn₃(PO₄)₂ | 0.75 | 170.2. | 149.2 | 157.4 |
| Example 3 | LiNi_{0.6}Co_{0.2}Mn_{0.2}O₂ | Mn₃(PO₄)₂ | 1.0 | 167.7 | 149.2 | 152.6 |
| Comparative Example 1 | LiNi_{0.6}Co_{0.2}Mn_{0.2}O₂ | - | - | 175.73 | 153.2 | 142.2 |
| Comparative Example 2 | LiNi_{0.6}Co_{0.2}Mn_{0.2}O₂ | Al₂O₃ | 0.5 | 178.3 | 141.0 | 120.3 |
| Comparative Example 3 | LiNi_{0.6}Co_{0.2}Mn_{0.2}O₂ | Al₂O₃ | 1.0 | 171.1 | 121.4 | 110.7 |
| Comparative Example 4 | LiNi_{0.6}Co_{0.2}Mn_{0.2}O₂ | Al₂O₃ | 3.0 | 166.3 | 97.4 | 58.5 |
| * cycle life capacity is discharge capacity after 50th cycle | | | | | | |

As shown in Table 1, it is recognized that the lithium secondary batteries to which the cathode active materials of Examples 1 to 3 including the Ni-rich lithium complex oxide core coated with manganese phosphate according to the present invention were applied were markedly improved in the power characteristics and the high temperature cycle life characteristics, in comparison to Comparative Example 1 using the cathode active material not including the coating layer.

However, it is recognized that the lithium secondary batteries including the known alumina-coated cathode active materials of Comparative Examples 2 to 4 did not show the improvement in the electrochemical characteristics including the power characteristics and the cycle life characteristics according to the surface coating, but were deteriorated. Particularly, the lithium secondary batteries to which the cathode active materials of Comparative Examples 2 to 4 were applied showed markedly decreased room temperature and high temperature cycle life characteristics of 97.4 to 141.0 mAh/g and 58.5 and 120.3 mAh/g, respectively.

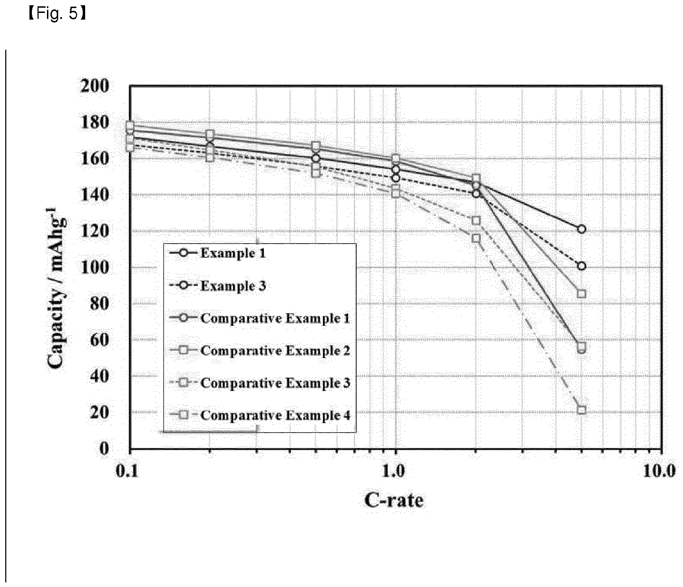

Furthermore, the graph showing the power characteristics of the lithium secondary batteries to which the cathode active material of Examples 1 to 3 and Comparative Examples 1 to 4 were applied is illustrated in Fig. 5, and the capacities according to C-rates are listed in the following Table 2.

**[Table 2]**

| | Capacity according to C-rate (mAh/g) | | | | | |
|---|---|---|---|---|---|---|
| | 0.1C | 0.2C | 0.5C | 1C | 2C | 5C |
| Example 1 | 171.9 | 166.8 | 160.3 | 154.2 | 146.9 | 121.2 |
| Example 2 | 170.2 | 165.1 | 157.0 | 151.8 | 143.1 | 110.2 |
| Example 3 | 167.7 | 163.2 | 156.0 | 149.5 | 140.7 | 100.8 |
| Comparative Example 1 | 175.73 | 171.5 | 165.3 | 158.7 | 145.1 | 54.9 |
| Comparative Example 2 | 178.3 | 173.8 | 167.4 | 160.2 | 149.4 | 85.6 |
| Comparative Example 3 | 171.1 | 164.8 | 155.5 | 143.7 | 126.1 | 56.6 |
| Comparative Example 4 | 166.3 | 160.7 | 152 | 140.9 | 116.2 | 21.4 |

As shown in Table 2, it is recognized that the power characteristics of the batteries to which the cathode active materials of Examples 1 to 3 prepared by coating manganese phosphate on the surface of the Ni-rich lithium complex oxide core according to the present invention were applied were equal to or higher than Comparative Example 1 using the cathode active material not including the coating layer. Particularly, Example 1 using the cathode active material coated with 0.5 wt% of manganese phosphate Mn₃(PO₄)₂ showed higher capacity at 5 C, 121.2 mAh/g, than the 54.9 mAh/g of Comparative Example 1.

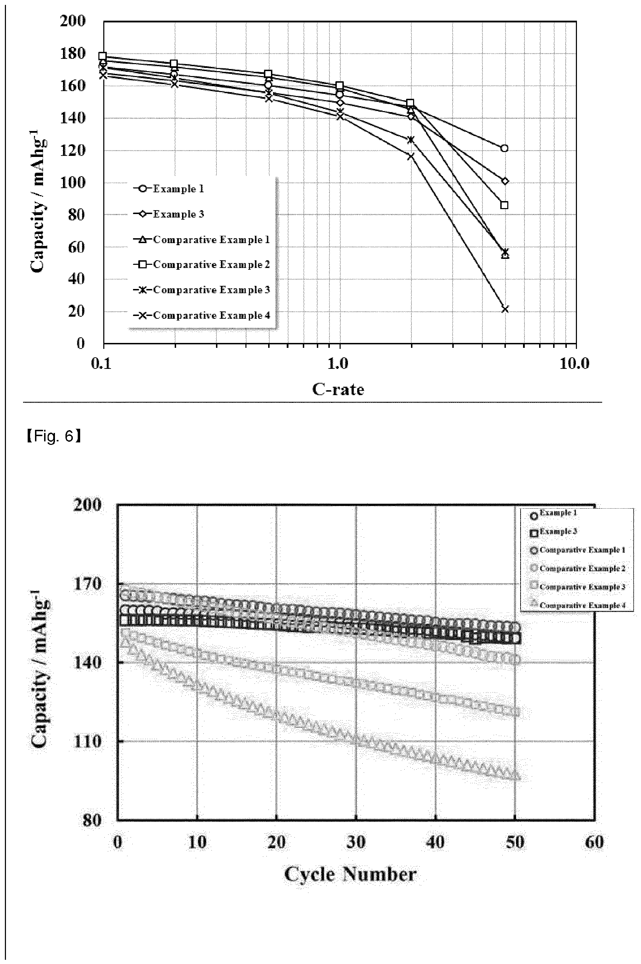

Furthermore, the graph showing the room temperature (25 °C) cycle life characteristics of the lithium secondary batteries to which the cathode active materials of Examples 1 to 3 and Comparative Examples 1 to 4 were applied is illustrated in Fig. 6, and the capacity change according to the charge/discharge cycle increase (cycle number) is shown in the following Table 3.

**[Table 3]**

| | Capacity according to room temperature cycle (mAh/g) | | | | | | Room temp. capacity retention rate after 50th charge/discharge (%) |
|---|---|---|---|---|---|---|---|
| | 1^{st} cycle | 10 cycle | 20 cycle | 30 cycle | 40 cycle | 50 cycle | |
| Example 1 | 159.9 | 158.4 | 156.9 | 154.6 | 152.1 | 149.2 | 93.3 |
| Example 2 | 157.3 | 156.8 | 155.1 | 153.1 | 151.8 | 149.2 | 94.8 |
| Example 3 | 156.1 | 155.9 | 154.4 | 152.8 | 151.3 | 149.2 | 95.6 |
| Comparative Example 1 | 165.5 | 163.3 | 160.2 | 158.0 | 155.1 | 153.2 | 92.6 |
| Comparative Example 2 | 167.5 | 161.8 | 156.6 | 151.3 | 146.4 | 141.0 | 84.2 |
| Comparative Example 3 | 151.4 | 143.5 | 137.3 | 132.0 | 126.7 | 121.4 | 80.2 |
| Comparative Example 4 | 147.9 | 131.7 | 120.2 | 111.1 | 103.8 | 97.4 | 65.9 |

As shown in Table 3, the batteries to which the cathode active materials of Examples 1 to 3 prepared by coating manganese phosphate on the surface of the Ni-rich lithium complex oxide core according to the present invention were applied showed about 4 mAh/g lower capacity than Comparative Example 1 using the cathode active material not including the coating layer, but Comparative Example 1 showed the capacity retention rate of 92.6 %, while Examples 1 to 3 showed markedly improved capacity retention rate of 93.3 % to 95.6 %.

On the contrary, Comparative Examples 2 to 4 using the cathode active material coated with Al₂O₃ showed poor capacity retention rates of 65.9 % to 84.2 % after the 50th charge/discharge, compared to the initial capacity.

Therefore, it is recognizable that the cathode active material including the Ni-rich lithium complex oxide core coated with manganese phosphate has an effect of markedly improving the room temperature cycle life characteristics.

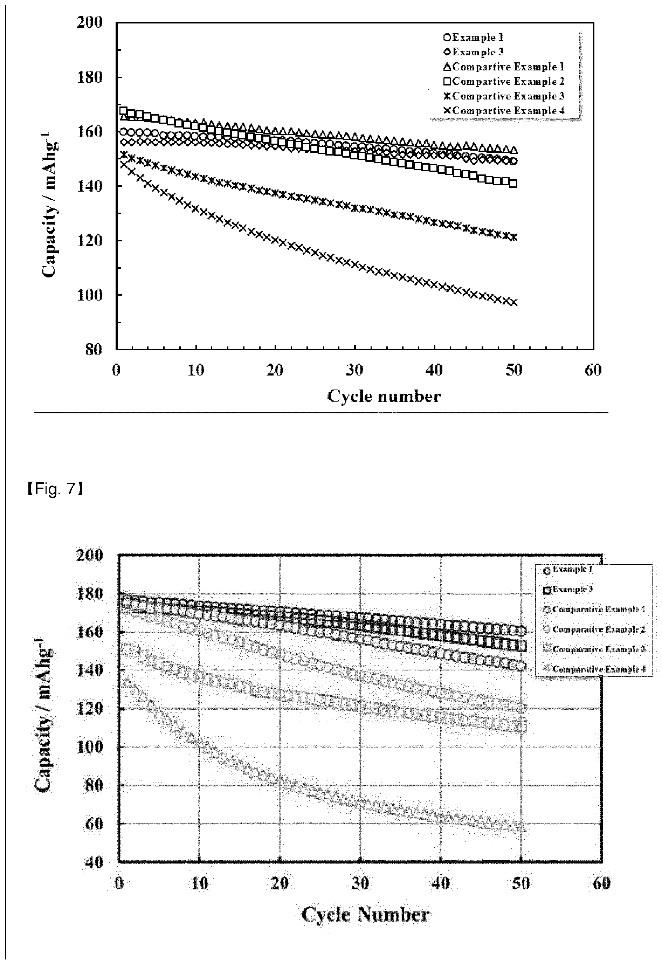

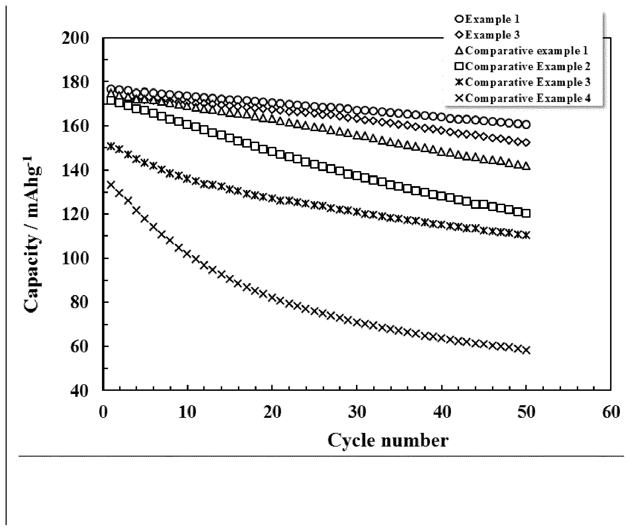

Furthermore, the graph showing the high temperature cycle life characteristics of the lithium secondary batteries to which the cathode active materials of Examples 1 to 3 and Comparative Examples 1 to 4 were applied is illustrated in Fig. 7, and the capacity change according to the charge/discharge cycle increase (cycle number) is shown in the following Table 4. The high temperature cycle life test was carried out in a constant temperature chamber at 60 °C.

**[Table 4]**

| | Capacity according to high temperature cycle (mAh/g) | | | | | | High temp. capacity retention rate after 50th charge/discharge (%) |
|---|---|---|---|---|---|---|---|
| | 1^{st} cycle | 10 cycle | 20 cycle | 30 cycle | 40 cycle | 50 cycle | |
| Example 1 | 176.4 | 173.4 | 170.4 | 167.1 | 163.8 | 160.4 | 90.9 |
| Example 2 | 174.6 | 172.3 | 169.1 | 165.5 | 160.1 | 157.4 | 90.1 |
| Example 3 | 172.8 | 170.8 | 167.7 | 163.5 | 158.1 | 152.6 | 88.3 |
| Comparative Example 1 | 175.0 | 169.2 | 163.4 | 156.1 | 148.7 | 142.2 | 81.3 |
| Comparative Example 2 | 171.6 | 160.6 | 148.1 | 137.1 | 128.0 | 120.3 | 70.1 |
| Comparative Example 3 | 150.8 | 136.3 | 127.4 | 121.2 | 115.3 | 110.7 | 73.4 |
| Comparative Example 4 | 133.6 | 102.2 | 82.4 | 71.2 | 63.8 | 58.5 | 43.8 |

As shown in Table 4, it is recognized that the batteries to which the cathode active materials of Examples 1 to 3 prepared by coating manganese phosphate on the surface of the Ni-rich lithium complex oxide core according to the present invention were applied showed markedly increased high temperature cycle life characteristics, compared to Comparative Example 1 using the cathode active material not including the coating layer and Comparative Examples 2 to 4 using the cathode active material coated with Al₂O₃.

Particularly, it is recognizable that Comparative Example 1 showed the initial capacity of 175.5 mAh/g, and the capacity of 142.2 mAh/g and the capacity retention rate of 81.3 % compared to the initial capacity after the 50th charge/discharge, whereas Examples 1 to 3 showed markedly enhanced capacity retention rates at 88.3 % to 90.9 % compared to the initial capacity after the 50th charge/discharge. More specifically, Example 1 using the cathode active material coated with 0.5 wt% of manganese phosphate showed the initial capacity of 176.4 mAh/g, and the capacity of 160.4 mAh/g and high capacity retention rate of 90.9 % compared to the initial capacity after the 50th charge/discharge, and thus it is recognizable that the capacity after the 50th charge/discharge of Example 1 was improved by about 13 % compared to Comparative Example 1. Furthermore, Example 1 using the cathode active material coated with 1.0 wt% of manganese phosphate showed the initial capacity of 172.8 mAh/g, and the capacity of 152.6 mAh/g and the capacity retention rate of 88.3% after the 50th charge/discharge, and thus it is recognizable that the capacity after the 50th charge/discharge of Example 3 was improved by about 7 % compared to Comparative Example 1.

It is recognized through the examples of the present invention that the optimal coating amount for enhancing the high temperature cycle life characteristics is 0.5 wt%.

On the contrary, Comparative Examples 2 to 4 coated with Al₂O₃ showed markedly poor capacity retention rates at 43.8% to 73.4% compared to the initial capacity after the 50th charge/discharge.

Therefore, the cathode active material obtained by coating manganese phosphate on the surface of the Ni-rich lithium complex oxide core according to the present invention has an effect of markedly improving the high temperature cycle life characteristics.

In addition, the DSC (differential scanning calorimetry) measurement was carried out for the evaluation of the thermal stability of the lithium secondary batteries to which the cathode active materials of Examples 1 and 3 and Comparative Examples 1 to 4 were applied. The temperature where the structure change (phase change or phase separation) of the cathode active material occurs and the concomitant caloric value obtained from the DSC evaluation can be used as the index of the thermal stability. Details regarding the DSC evaluation are disclosed below.

Initially, the battery fully charged at 4.3 V was dismantled and the cathode active material was collected. The lithium salt left on the cathode surface was washed with DMC and eliminated therefrom, and the cathode was dried. After putting 7 mg of cathode powder collected from the cathode in a pressure-resistant pan for the DSC measurement, 3 µL of the electrolyte solution (1 M LiPF₆ was dissolved in EC:EMC (1:2)) was injected therein so that the cathode powder was completely impregnated with the electrolyte solution. The temperature range for the DSC analysis was from 25 °C to 350 °C, and the scanning speed was 10 °C /min. The test was carried out under a controlled air environment.

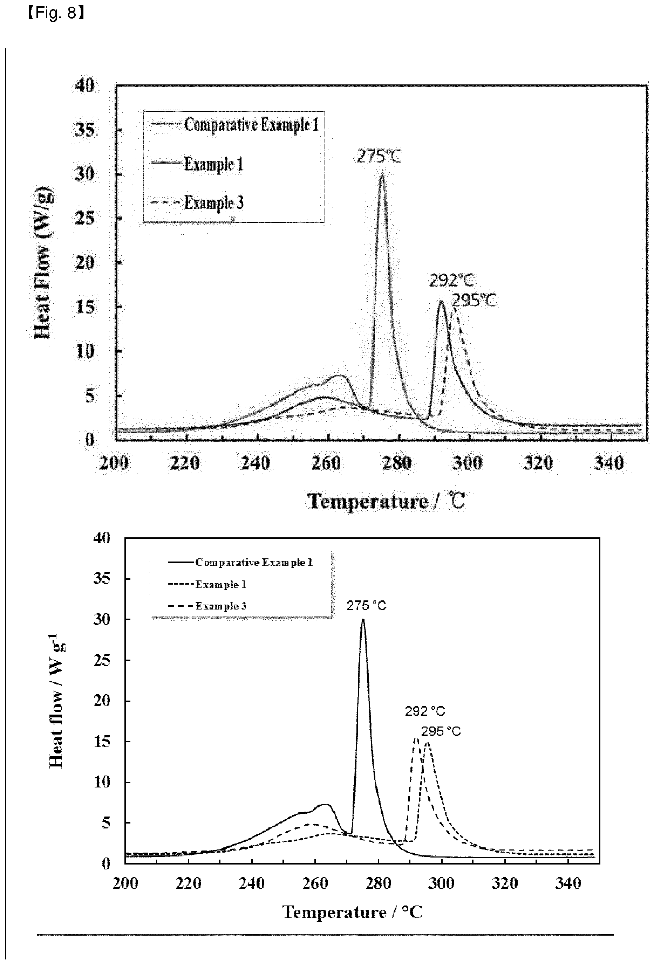

The DSC results of the electrodes charged at 4.3 V measured by using the cathode active materials of Examples 1 and 3 and Comparative Examples 1 to 4 are listed in the following Table 5. Furthermore, the representative DSC curves obtained by using the cathode active materials of Examples 1 and 3 and Comparative Examples 1 to 4 are illustrated in Fig. 8 (Heat flow, Temperature (°C)). The DSC measurement was carried out 3 times or more on the cathode active materials of the examples and comparative examples, and the average value was calculated.

**[Table 5]**

| | Exothermal peak temp. | | Caloric value | |
|---|---|---|---|---|
| | Temp. (°C) | Variation ΔT (°C) | Absolute value (J/g) | Rate to Comparative Example 1 (%) |
| Comparative Example 1 | 275 | - | 323 | 100 |
| Example 1 | 292 | 17 | 236 | 73 |
| Example 3 | 295 | 20 | 217 | 67.3 |

As shown in Table 5, the cathode active material (bare) of Comparative Example 1 not coated with Mn₃(PO₄)₂ showed a main exothermal peak at 275 °C and a caloric value of 323 J/g. The cathode active materials of Examples 1 and 3 coated with Mn₃(PO₄)₂ (0.5 wt%, 1.0 wt%) according to the present invention showed the main exothermal peak at a higher temperature than Comparative Example 1, and the caloric values thereof were decreased.

More specifically, in the cases of Examples 1 and 3, since the coating amounts of Mn₃(PO₄)₂ were increased to 0.5 wt% and 1.0 wt%, the main exothermal peak temperatures also moved to higher temperatures of 292 °C and 295 °C, and the caloric values were 236 J/g and 217 J/g which were markedly lower than Comparative Example 1. Particularly, in the case of Example 3, the main exothermal peak temperature was increased by 20 °C or more and the caloric value decreased by about 32.7 % compared to Comparative Example 1, and thus it is recognized that it shows excellent thermal stability.

## Claims

1. A cathode active material for a lithium secondary battery, including a coating layer comprising manganese phosphate formed on the surface of a nickel-based lithium transition metal oxide,
wherein the nickel-based lithium transition metal oxide includes nickel (Ni), manganese (Mn), and cobalt (Co) as the transition metal, and the content of nickel is 50 % or more based on the total of the transition metals.

2. The cathode active material for a lithium secondary battery according to Claim 1, wherein the nickel-based lithium transition metal oxide is represented by the following Chemical Formula 1:
[Chemical Formula 1] LiNiₐCo_{b}Mn_{c}M_{d}O₂
wherein, in Chemical Formula 1, a is 0.5 or more, b is 0.1 to 0.3, c is 0.1 to 0.3, d is 0 to 0.1, and a+b+c+d = 1; and M is one or more metal elements selected from the group consisting of Al, Mg, Fe, Cu, Zn, Cr, Ag, Ca, Na, K, In, Ga, Ge, V, Mo, Nb, Si, Ti, and Zr.

3. The cathode active material for a lithium secondary battery according to Claim 1, wherein manganese phosphate has a crystal structure of monoclinic Bravais lattice and space group 14.

4. The cathode active material for a lithium secondary battery according to Claim 1, wherein the manganese phosphate has an average particle diameter of 100 nm or less.

5. The cathode active material for a lithium secondary battery according to Claim 1, wherein the content of manganese phosphate is 0.1 wt% to 5.0 wt% of the total weight of the cathode active material.

6. A method of preparing a cathode active material for a lithium secondary battery according to Claim 1, including steps of: forming a coating layer by adding a nickel-based lithium transition metal oxide to a coating solution including a manganese salt and a phosphate; and heat-treating the nickel-based lithium transition metal oxide on which the coating layer is formed,
wherein the nickel-based lithium transition metal oxide includes nickel (Ni), manganese (Mn), and cobalt (Co) as the transition metal, and the content of nickel is 50 % or more based on the total of the transition metals.

7. The method according to Claim 6, wherein the manganese salt is one or more selected from the group consisting of manganese oxide, manganese oxalate, manganese acetate, manganese nitrate, and derivatives thereof.

8. The method according to Claim 6, wherein the phosphate is one or more selected from the group consisting of ammonium phosphate, sodium phosphate, potassium phosphate, and derivatives thereof.

9. The method according to Claim 6, wherein the heat-treating step is carried out at a temperature of 200 °C to 700 °C.

## Patentansprüche

1. Ein kathodenaktives Material für eine Lithium-Sekundärbatterie, das eine Beschichtungsschicht, umfassend Manganphosphat, umfasst, gebildet auf der Oberfläche eines Nickel-basierten Lithium-Übergangsmetalloxids,
wobei das Nickel-basierte Lithium-Übergangsmetalloxid Nickel (Ni), Mangan (Mn) und Cobalt (Co) als das Übergangsmetall umfasst und der Gehalt an Nickel 50 % oder mehr, basierend auf der Gesamtheit der Übergangsmetalle, beträgt.

2. Das kathodenaktive Material für eine Lithium-Sekundärbatterie gemäß Anspruch 1, wobei das Nickel-basierte Lithium-Übergangsmetalloxid durch die folgende Chemische Formel 1 dargestellt wird:
[Chemische Formel 1] LiNiₐCo_{b}Mn_{c}M_{d}O₂
wobei in der Chemischen Formel 1 a gleich 0,5 oder mehr, b gleich 0,1 bis 0,3, c gleich 0,1 bis 0,3, d gleich 0 bis 0,1 und a+b+c+d = 1 ist; und M ein oder mehrere Metallelemente ausgewählt aus der Gruppe bestehend aus Al, Mg, Fe, Cu, Zn, Cr, Ag, Ca, Na, K, In, Ga, Ge, V, Mo, Nb, Si, Ti, and Zr ist.

3. Das kathodenaktive Material für eine Lithium-Sekundärbatterie gemäß Anspruch 1, wobei Manganphosphat eine monokline Kristallstruktur im Bravais-Gitter und Raumgruppe 14 aufweist.

4. Das kathodenaktive Material für eine Lithium-Sekundärbatterie gemäß Anspruch 1, wobei das Manganphosphat einen mittleren Teilchendurchmesser von 100 nm oder weniger aufweist.

5. Das kathodenaktive Material für eine Lithium-Sekundärbatterie gemäß Anspruch 1, wobei der Gehalt des Manganphosphats 0,1 Gew.-% bis 5,0 Gew.-% des Gesamtgewichts des kathodenaktiven Materials beträgt.

6. Ein Verfahren zum Herstellen eines kathodenaktiven Materials für eine Lithium-Sekundärbatterie gemäß Anspruch 1, umfassend die Schritte:
Bilden einer Beschichtungsschicht durch Zugeben eines Nickel-basierten Lithium-Übergangsmetalloxids zu einer Beschichtungslösung, enthaltend ein Mangansalz und ein Phosphat; und Wärmebehandeln des Nickel-basierten Lithium-Übergangsmetalloxids, auf dem die Beschichtungsschicht gebildet wird,
wobei das Nickel-basierte Lithium-Übergangsmetalloxid Nickel (Ni), Mangan (Mn) und Cobalt (Co) als das Übergangsmetall enthält und der Gehalt an Nickel 50 % oder mehr, basierend auf der Gesamtheit der Übergangsmetalle, beträgt.

7. Das Verfahren gemäß Anspruch 6, wobei das Mangansalz eines oder mehrere, ausgewählt aus der Gruppe bestehend aus Manganoxid, Manganoxalat, Manganacetat, Mangannitrat und Derivaten davon, ist.

8. Das Verfahren gemäß Anspruch 6, wobei das Phosphat eines oder mehrere, ausgewählt aus der Gruppe bestehend aus Ammoniumphosphat, Natriumphosphat, Kaliumphosphat und Derivaten davon, ist.

9. Das Verfahren gemäß Anspruch 6, wobei der Wärmebehandlungsschritt bei einer Temperatur von 200 °C bis 700 °C durchgeführt wird.

## Revendications

1. Matériau actif de cathode pour une batterie rechargeable au lithium, incluant une couche de revêtement comprenant du phosphate de manganèse formé sur la surface d'un oxyde de métal de transition lithié à base de nickel,
dans lequel l'oxyde de métal de transition lithié à base de nickel comprend du nickel (Ni), du manganèse (Mn), et du cobalt (Co) en tant que métal de transition, et la teneur en nickel est de 50 % ou plus sur la base du total des métaux de transition.

2. Matériau actif de cathode pour une batterie rechargeable au lithium selon la revendication 1, dans lequel l'oxyde de métal de transition lithié à base de nickel est représenté par la Formule chimique 1 suivante :
[Formule chimique 1] LiNiₐCo_{b}Mn_{c}M_{d}O₂
dans lequel, dans la Formule chimique 1, a est 0,5 ou plus, b est 0,1 à 0,3, c est 0,1 à 0,3, d est 0 à 0,1, et a+b+c+d=1 ; et M est un ou plusieurs éléments métalliques sélectionnés à partir du groupe constitué par Al, Mg, Fe, Cu, Zn, Cr, Ag, Ca, Na, K, In, Ga, Ge, V, Mo, Nb, Si, Ti, et Zr.

3. Matériau actif de cathode pour une batterie rechargeable au lithium selon la revendication 1, dans lequel le phosphate de manganèse a une structure cristalline de réseau de Bravais monoclinique et de groupe spatial 14.

4. Matériau actif de cathode pour une batterie rechargeable au lithium selon la revendication 1, dans lequel le phosphate de manganèse a un diamètre de particule moyen de 100 nm ou moins.

5. Matériau actif de cathode pour une batterie rechargeable au lithium selon la revendication 1, dans lequel la teneur en phosphate de manganèse est de 0,1 % en poids à 5,0 % en poids du poids total du matériau actif de cathode.

6. Procédé de préparation d'un matériau actif de cathode pour une batterie rechargeable au lithium selon la revendication 1, comprenant les étapes consistant à : former une couche de revêtement en ajoutant un oxyde de métal de transition lithié à base de nickel à une solution de revêtement comprenant un sel de manganèse et un phosphate ; et traiter thermiquement l'oxyde de métal de transition lithié à base de nickel sur lequel la couche de revêtement est formée,
dans lequel l'oxyde de métal de transition lithié à base de nickel comprend du nickel (Ni), du manganèse (Mn), et du cobalt (Co) en tant que métal de transition, et la teneur en nickel est de 50 % ou plus sur la base du total des métaux de transition.

7. Procédé selon la revendication 6, dans lequel le sel de manganèse est un ou plusieurs sélectionnés à partir du groupe constitué par l'oxyde de manganèse, l'oxalate de manganèse, l'acétate de manganèse, le nitrate de manganèse, et les dérivés de ceux-ci.

8. Procédé selon la revendication 6, dans lequel le phosphate est un ou plusieurs sélectionnés à partir du groupe constitué par le phosphate d'ammonium, le phosphate de sodium, le phosphate de potassium, et les dérivés de ceux-ci.

9. Procédé selon la revendication 6, dans lequel l'étape de traitement thermique est réalisée à une température de 200 °C à 700 °C.
